# EUROPEAN PATENT SPECIFICATION

(11) **EP 2 431 267 B1**
(45) Date of publication and mention of the grant of the patent: **20.03.2013**
(21) Application number: 10009657.7
(22) Date of filing: 16.09.2010
(51) Int. Cl.: B62K 15/00, B62B 5/00, B62J 7/04

(54) **Trolley-like folding bicycle**
Handwagenartiges Klappfahrrad
Bicyclette pliable de type chariot

(43) Date of publication of application: 21.03.2012
(73) Proprietor: Hon, Joshua, Taipei Hsien (TW)
(72) Inventor: Uimonen, Joakim, San Chung City Taipei County 241 (TW); Hon, Joshua, San Chung City Taipei Hsien (TW)
(74) Representative: Altenburg, Bernardus Stephanus Franciscus

(56) References cited:
- EP-A1- 1 810 917
- FR-A1- 2 936 773
- GB-A- 2 435 863

## Description

### BACKGROUND OF THE INVENTION

### Field of the Invention

The present invention relates to a folding bicycle.

### Description of the Related Art

A folding bicycle has to be moved sometimes after it is folded. Several techniques of combining auxiliary wheels and a folding bicycle have been disclosed to facilitate moving the folding bicycle after it is folded. For example, U.S. Patent No. 7,591,473 discloses a folding bicycle. The rear seat frame of the folding bicycle has four auxiliary wheels. When the bicycle is in a usage state, the auxiliary wheels are on the rear seat frame (above the rear wheel). When a user wants to fold the bicycle, he or she rotates the rear wheel through 180 degrees around a hinge axle such that the auxiliary wheels contact the ground. This motion folds the rear wheel and makes the auxiliary wheels contact the ground so that the folded bicycle can be moved with the auxiliary wheels. However, when the user wants to pull the folded bicycle, he or she has to bend down, which makes him or her uncomfortable. Also, due to the design of the rolling direction of the auxiliary wheels, the folded bicycle tends to tip to the left or right. Thus the user has to balance the folded bicycle with more wrist force when pulling the folded bicycle. This may hurt the user's wrists.

In addition, U.S. Patent No. 7,341,270 discloses a carrier rack of a folding bicycle equipped with two auxiliary wheels. When it is desired to use the auxiliary wheels, a user has to collapse the carrier rack and then turn the carrier rack toward the ground such that the auxiliary wheels contact the ground. The design of the carrier rack is complicated, and the height of the carrier rack is too great and is not the best design of a carrier rack. Moreover, the user also has to bend down to pull the folded bicycle, which is uncomfortable. Furthermore, because the two auxiliary wheels are located above the rear wheel when the bicycle is unfolded and below the rear wheel when the bicycle is folded, the width is too great to allow the bicycle to be moved conveniently (e.g., when passing through the entrance of public transportation station or the door of a train).

EP1810917 discloses a foldable bicycle having one or more auxiliary wheels at the lower end of the down tube carrying the sadle. In the folded state, the folded bicycle rolled on its front and rear wheel, in contrast to the present invention where the frond and rear wheel are off the ground and transverse to the rotational axes of the auxiliary wheels.

FR2936773 discloses a foldable bike having stabilisation wheels similar to those disclosed in EP1810917.

GB2435863 discloses a foldable bike having auxiliary on top of the frame above the rear wheel for carrying luggage. The axes of rotation are parallel to the axis of rotation of the rear wheel.

Therefore, it is desirable to provide a folding bicycle which can be easily drawn, preferably like a luggage case. Such a folding bicycle allows a user to draw it in a comfortable way and will not tilt easily when being drawn. Also, the width of such a folding bicycle should not be too great when the folding bicycle is drawn.

### SUMMARY OF THE INVENTION

It is an object of the present invention to provide a trolley-like folding bicycle which can be easily drawn like a luggage case after being folded.

It is another object of the present invention to provide a trolley-like folding bicycle which can be drawn vertically after being folded and which has a draw bar.

It is still another object of the present invention to provide a trolley-like folding bicycle with a draw wheel set such that the trolley-like folding bicycle can stand upright on the ground simply with cushion blocks of the draw wheel set.

To achieve the aforementioned objects, the present invention provides a trolley-like folding bicycle, which mainly comprises a bicycle frame, a folding device, a transmission gear, a draw bar, and a draw wheel set according to claim 1. With the operation of the folding device, the present invention has a usage state and a folded state. When the present invention is in the folded state, the user can draw the trolley-like folding bicycle by simply turning the folded bicycle body upright such that the draw wheel set contacts the ground and then pulling up the draw bar. At this stage, an axis formed with the draw bar is substantially perpendicular to a draw rotation axis formed with the auxiliary wheels of the draw wheel set. The user can move the trolley-like folding bicycle by simply pulling the draw bar, as easily as drawing a luggage case. The draw bar can be a telescopic bar.

In the other embodiment of the present invention, the draw bar can be a hollow tube. The seat post of the trolley-like folding bicycle of the present invention can be dismounted and then connected to the hollow tube such that the trolley-like folding bicycle can be drawn with simply the draw bar.

All the claims are incorporated in the description by reference.

### BRIEF DESCRIPTION OF THE DRAWINGS

FIG. 1 is a lateral view of a first embodiment of the present invention in a usage state.
FIG. 2 is a schematic drawing of the first embodiment of the present invention in the usage state.
FIG. 3 is a schematic drawing of the first embodiment of the present invention in a folded state.
FIG. 4 is a lateral view of the first embodiment of the present invention in the folded state.
FIG. 5 is a lateral view of the first embodiment of the present invention in the usage state.
FIG. 6 is a schematic drawing of the first embodiment of the present invention in the usage state.
FIG. 7 is a schematic drawing showing dismounting a seat post according to a second embodiment of the present invention.
FIG. 8 is a lateral view of the second embodiment of the present invention in a usage state.
FIG. 9 is a schematic drawing of the second embodiment of the present invention in the usage state.

### DETAILED DESCRIPTION OF THE PREFERRED EMBODIMENT

The advantages and innovative features of the invention will become more apparent from the following detailed description when taken in conjunction with the accompanying drawings.

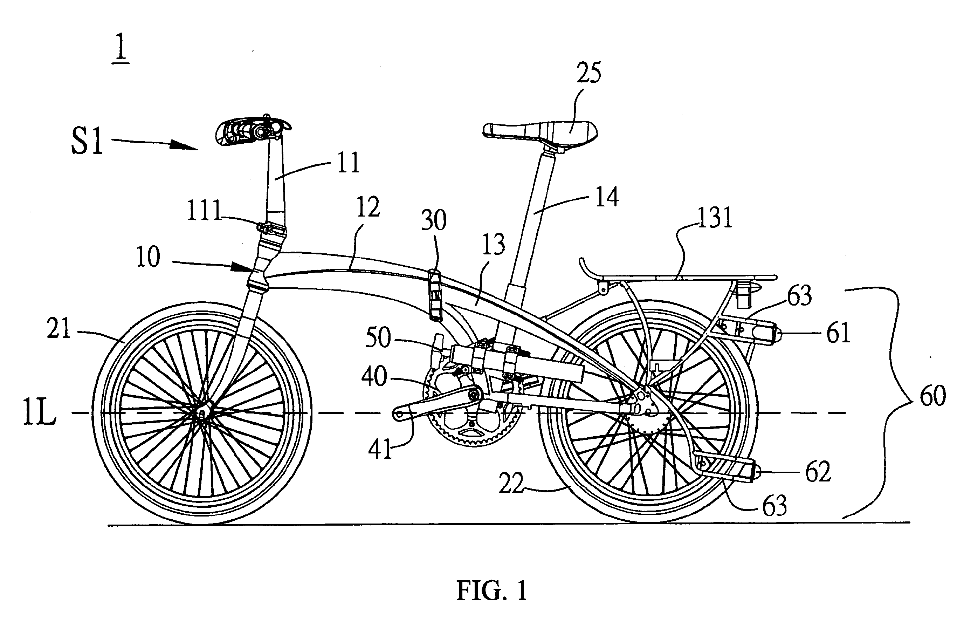

Please refer to FIGs. 1~6 regarding a first embodiment of a trolley-like folding bicycle 1 of the present invention. The trolley-like folding bicycle 1 of the present invention mainly comprises a bicycle frame 10, a front wheel 21, a rear wheel 22, a saddle 25, a folding device 30, a transmission gear 40, a draw bar 50, and a draw wheel set 60 assembled along a bicycle body axis 1L. The feature of the present invention is to enable the bicycle body of the folded trolley-like folding bicycle 1 to be drawn like a trolley via the design of the draw bar 50 and the draw wheel set 60. In this embodiment, the draw bar 50 is a telescopic bar for drawing the folded trolley-like folding bicycle 1. The draw wheel set 60 comprises a first auxiliary wheel 61, a second auxiliary wheel 62, and a draw frame 63. Both the first auxiliary wheel 61 and the second auxiliary wheel 62 arc on the same side of the rear wheel 22. After the trolley-like folding bicycle 1 is folded, the first auxiliary wheel 61 and the second auxiliary wheel 62 can replace the front wheel 21 and the rear wheel 22 and roll such that the bicycle body moves.

The bicycle frame 10 of the trolley-like folding bicycle 1 comprises a control frame 11, a front half frame 12, a rear half frame 13, and a seat post 14. The control frame 11 is for controlling the direction of travel of the trolley-like folding bicycle 1 and is connected to the front half frame 12 and the front wheel 21. The rear half frame 13 is connected to the seat post 14 and the rear wheel 22. When the trolley-like folding bicycle 1 is being folded, the seat post 14 can be arranged in the bicycle body vertically. A transmission gear 40 is connected to the rear half frame 13 and the rear wheel 22. The transmission gear 40 comprises a pedal mechanism 41. However, the transmission gear 40 is a well known apparatus and is not the primary issue of the present invention, and so it is not elaborated upon. Moreover, the draw bar 50 and the draw wheel set 60 are respectively connected to the rear half frame 13. The rear half frame 13 further has a rear seat frame 131 for being connected to the draw frame 63.

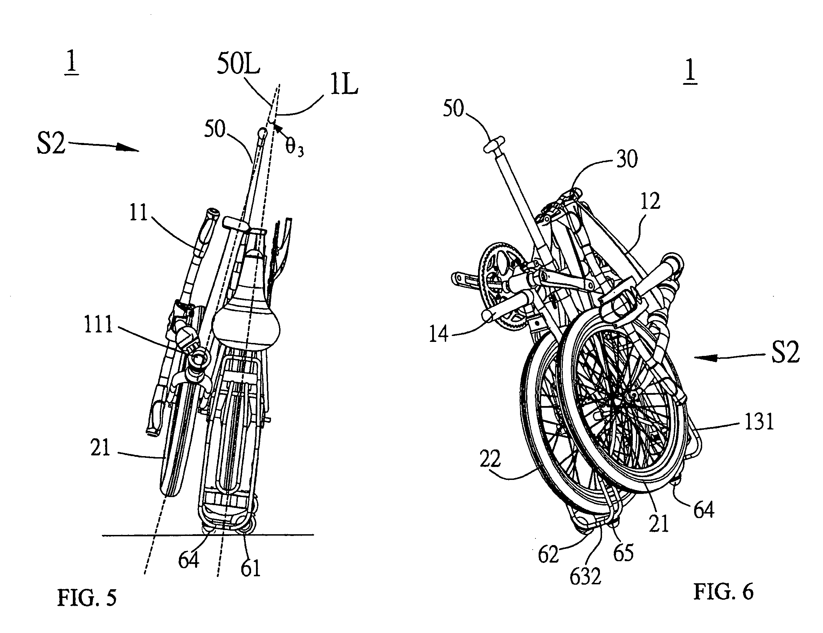

In addition, another feature of the present invention is that the draw wheel set 60 of the trolley-like folding bicycle 1 has a first cushion block 64 and a second cushion block 65, and the draw frame 63 has a first U-shaped frame 631 and a second U-shaped frame 632. The first U-shaped frame 631 and the second U-shaped frame 632 are connected to the rear seat frame 131. The first auxiliary wheel 61 and the first cushion block 64 are located at the first U-shaped frame 631. The second auxiliary wheel 62 and the second cushion block 65 are located at the second U-shaped frame 632. As shown in FIG. 5, in order to facilitate drawing the trolley-like folding bicycle 1, the first auxiliary wheel 61 and the second auxiliary wheel 62 are respectively located on the same side of the first U-shaped frame 631 and the second U-shaped frame 632. The first cushion block 64 located at the first U-shaped frame 631 is adjacent to the first auxiliary wheel 61. The second cushion block 65 located at the second U-shaped frame 632 is adjacent to the second auxiliary wheel 62.

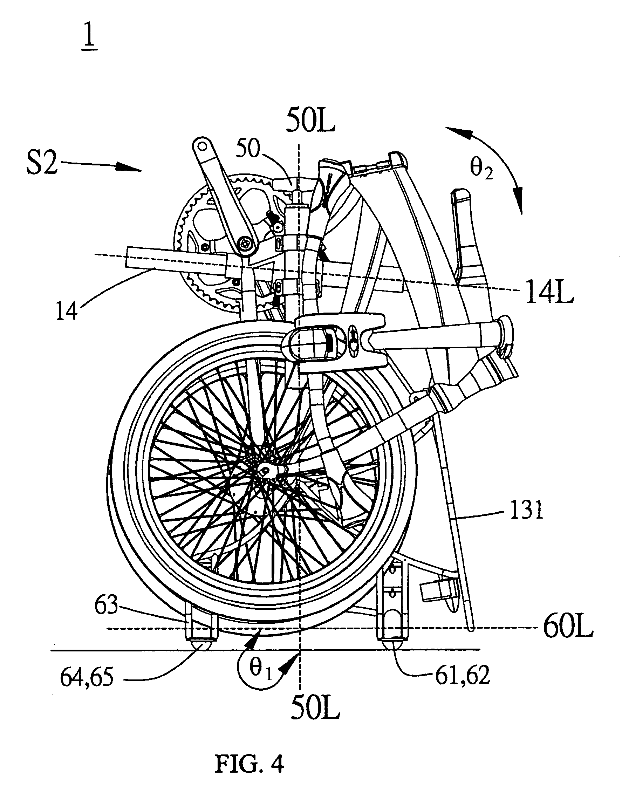

With the design of the first U-shaped frame 631, the second U-shaped frame 632, the first cushion block 64, and the second cushion block 65, another object of the present invention can be achieved; that is, to allow the trolley-like folding bicycle 1 to stop during the drawing or to be placed stably alone on the ground. Because the first cushion block 64 and the second cushion block 65 can provide support, they can share the bearing of the weight of the whole trolley-like folding bicycle 1 together with the first auxiliary wheel 61 and the second auxiliary wheel 62. This is different from U.S. Patent No. 7,591,473. In U.S. Patent No. 7,591,473, four auxiliary wheels and the rear seat frame bear the weight of the whole bicycle directly. In the present invention, the function of the first cushion block 64 and the second cushion block 65 is not only to share the weight of the bicycle, but also to achieve the stability of the trolley-like folding bicycle 1 when the trolley-like folding bicycle 1 is upright (see FIG. 4). Moreover, with the design of the first U-shaped frame 631, the second U-shaped frame 632, the first cushion block 64, and the second cushion block 65, the trolley-like folding bicycle 1 can stand upright stably on the ground even in a usage state S1.

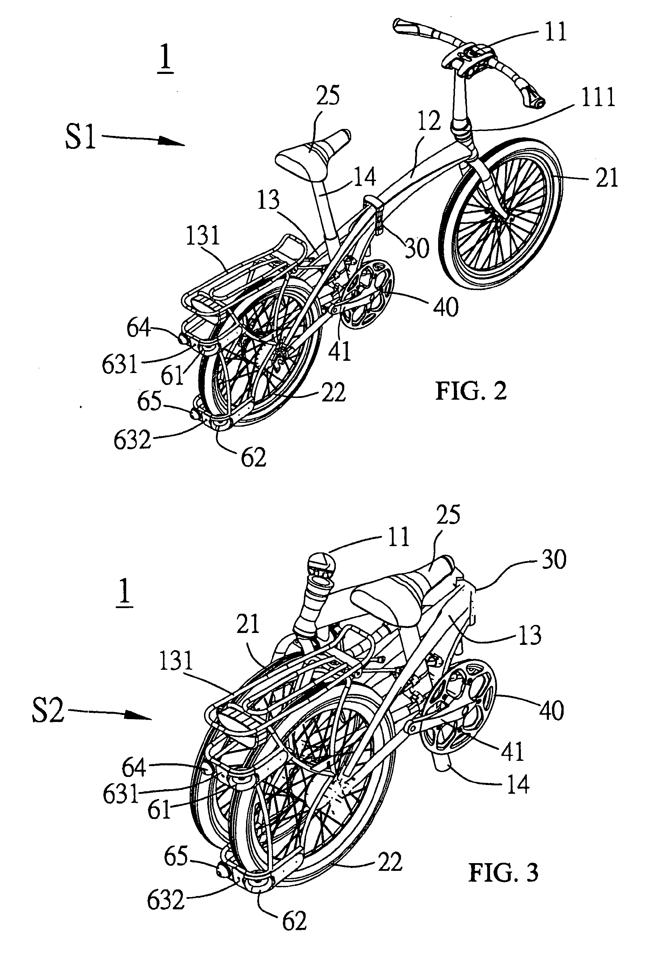

In addition, the front half frame 12 is connected to the rear half frame 13 via the folding device 30. The trolley-like folding bicycle 1 has two states: the usage state S1 (FIGs. 1 and 2) and a folded state S2 (FIGs. 3~6). When the front half frame 12 and the rear half frame 13 are folded via the folding device 30, the trolley-like folding bicycle 1 switches into the folded state S2. During the folding process, the front wheel 21 and the rear wheel 22 move closer to each other. The control frame 11 is folded and then located on the other side of the front wheel 21 via the handlebar frame folding mechanism 111. The folding function is well known and is not the primary issue of the present invention, and so it is not elaborated upon. In this embodiment, in the folded state S2, the draw bar 50 is located between the front wheel 21 and the rear wheel 22 (shown in FIG. 5). Thus the draw bar 50 will not increase significantly the volume of the trolley-like folding bicycle 1 in the folded state S2.

The object of the present invention is to allow the trolley-like folding bicycle 1 in the folded state S2 to be easily drawn like a luggage case. To achieve the object, after the trolley-like folding bicycle 1 is folded (see FIG. 3), a user puts it upright, as shown in FIG. 4. The draw bar axis 50L formed with the draw bar 50 should be substantially perpendicular to the draw rotation axis 60L formed with the first auxiliary wheel 61 and the second auxiliary wheel 62; that is to say, the included angle θ₁ formed by the draw bar axis 50L and the draw rotation axis 60L is substantially 90 degrees. To put the trolley-like folding bicycle 1 upright and draw it when it is upright is one of the primary issues of the present invention. In order to show the feature of "upright", when the trolley-like folding bicycle 1 is in the folded state S2 for being drawn, the seat post 14 forms a seat post axis 14L. The included angle θ₂ formed by the seat post axis 14L and the draw bar axis 50L is 60~120 degrees.

Turning the trolley-like folding bicycle 1 from the horizontal to the vertical makes the first auxiliary wheel 61 and the second auxiliary wheel 62 contact the ground, so as to help the bicycle body move. In addition, another advantage of turning the trolley-like folding bicycle 1 from the horizontal to the vertical is that moving the trolley-like folding bicycle 1 becomes easier and more convenient. The lateral length of a common folded folding bicycle is usually greater than the height. If the bicycle is drawn in this state, the bicycle may be cumbersome due to the greater lateral coverage area of the bicycle. Conversely, if the bicycle is turned from the horizontal to the vertical, the lateral length of the bicycle is smaller than the height. Thus the aforementioned problem can be solved. Therefore, in the present invention, the folded trolley-like folding bicycle 1 is drawn vertically to meet the need in practical use.

As shown in FIGs. 5 and 6, in this embodiment, the draw bar 50 is a telescopic tube 50 able to be lengthened and shortened. When the user is going to draw the trolley-like folding bicycle 1, he or she may lengthen the draw bar 50 so as to draw the trolley-like folding bicycle 1. The draw bar axis 50L and the bicycle body axis 1L form an included angle θ₃. The included angle θ₃ is preferably not too wide. An angle between 0~35 degrees is recommended. In addition, the rolling direction of the first auxiliary wheel 61 and the second auxiliary wheel 62 is perpendicular to the rolling direction of the front wheel 21 and the rear wheel 22. Although this feature is the same as the rolling direction of the two auxiliary wheels in U.S. Patent No. 7,341,270, the user does not have to fold the rear seat frame to allow the first auxiliary wheel 61 and the second auxiliary wheel 62 to contact the ground in the present invention, which is more convenient for the use and the operation of the folded trolley-like folding bicycle 1. Generally, with the present invention the axes of the auxiliary wheels will be transverse to a plane defined by the axes of the front and rear wheel when parallel in the usage state, and will preferably make an angle of less than 30° with the normal to said plane.

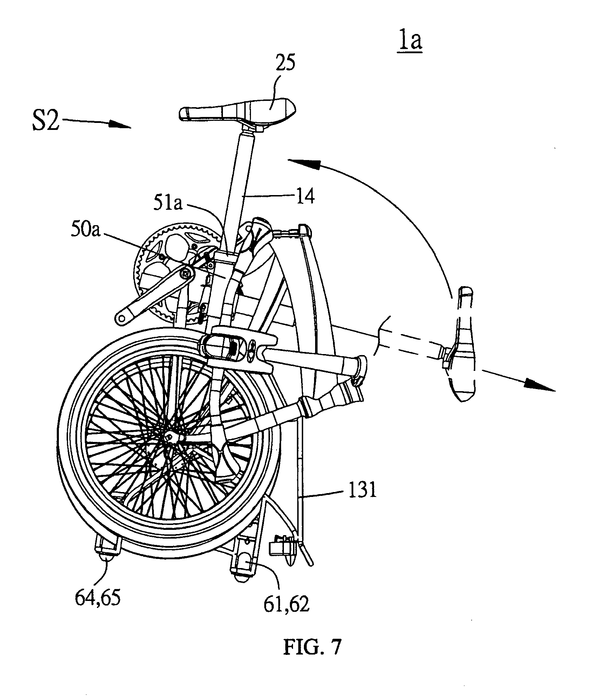

Please refer to FIGs. 7~9 regarding a second embodiment of a trolley-like folding bicycle 1 of the present invention. The major difference between the first and the second embodiments of the present invention is that the bicycle frame 10 of a trolley-like folding bicycle 1a has a quick release clamp (not shown), and the draw bar 50 has a quick release clamp 51a. Moreover, the draw bar 50 of this embodiment is a hollow tube 50a.

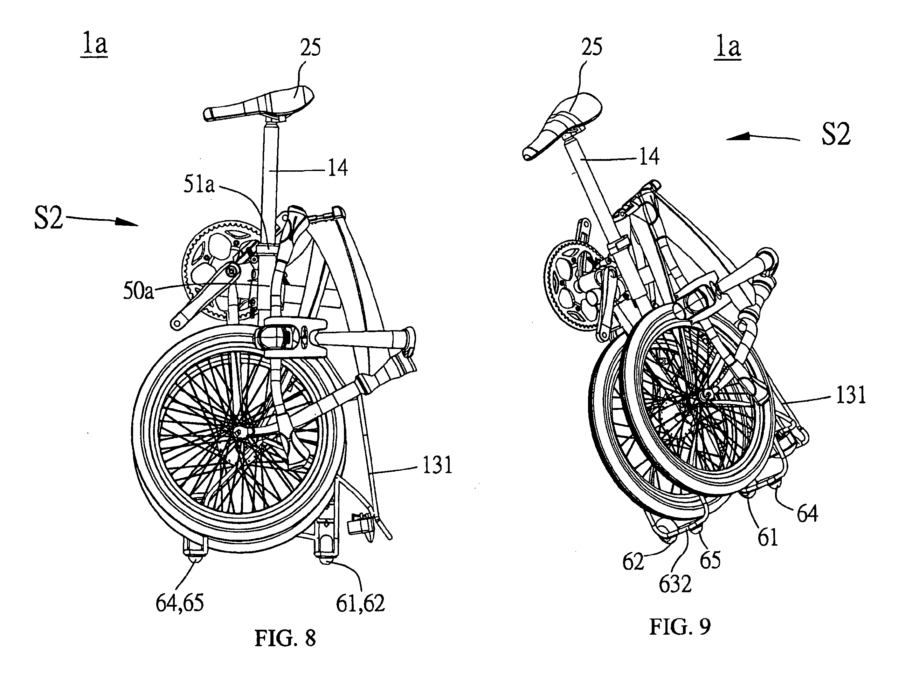

In this embodiment, the trolley-like folding bicycle 1a has a quick release clamp (not shown) between the bicycle frame 10 and the seat post 14 for dismounting the seat post 14. Also, the hollow tube 50a has the quick release clamp 51a to allow the dismounted seat post 14 to be connected to the hollow tube 50a. As shown in FIG. 7, when the seat post 14 is connected to the hollow tube 50a, the seat post 14 and the hollow tube 50a can replace the telescopic draw bar 50 of the first embodiment and allow the user to draw the trolley-like folding bicycle 1a. Its usage state is shown in FIGs. 8 and 9. The details of the operation of each component of the trolley-like folding bicycle 1a are the same as the first embodiment and thus are not elaborated upon.

In conclusion, because of the draw bar 50 and the draw wheel set 60 of the trolley-like folding bicycle 1 of the present invention, the trolley-like folding bicycle 1 in the folded state S2 can be drawn like a luggage case. Moreover, the user only has to fold the trolley-like folding bicycle 1 and put the bicycle body upright to draw the trolley-like folding bicycle 1, which is very convenient for use.

It is noted that the above-mentioned embodiments are only for illustration. It is intended that the present invention cover modifications and variations of this invention provided they fall within the scope of the following claims.

## Claims

1. A trolley-like folding bicycle (1, 1a), comprising a bicycle frame (10), a front wheel (21), a rear wheel (22), a saddle (25), a folding device (30), and a transmission gear (40) assembled along a bicycle body axis (1L), wherein the bicycle frame (10) comprises a control frame (11), a front half frame (12), a rear half frame (13), and a seat post (14), the control frame (11) being connected to the front half frame (12) and the front wheel (21), the rear half frame (13) being connected to the seat post (14) and the rear wheel (22), the transmission gear (40) being connected to the rear half frame (13) and the rear wheel (22), the folding device (30) connecting the front half frame (12) and the rear half frame (13) and enabling the front half frame (12) and the rear half frame (13) to be folded such that the front wheel (21) and the rear wheel (22) move closer to each other, via the operation of the folding device (30), the trolley-like folding bicycle (1, 1a) having a usage state (S1) and a folded state (S2), **characterized in that** the trolley-like folding bicycle (1, 1a) comprises:
a draw bar (50, 50a) connected to the bicycle frame (10); and
a draw wheel set (60) comprising a first auxiliary wheel (61), a second auxiliary wheel (62), and a draw frame (63), the draw frame (63) being connected to the rear half frame (13), the first auxiliary wheel (61) and the second auxiliary wheel (62) being connected to the draw frame (63), the first auxiliary wheel (61) and second auxiliary wheel (62) being laterally positioned with respect to the rear wheel at the same side thereof;
wherein when the trolley-like folding bicycle (1, 1a) is in the folded state (S2) for being drawn, the draw bar (50, 50a) forms a draw bar axis (50L), the first auxiliary wheel (61) and the second auxiliary wheel (62) form a draw rotation axis (60L), and the draw bar axis (50L) is substantially perpendicular to the draw rotation axis (60L),
wherein the draw rotation axis (60L) of the auxiliary wheels (61, 62) is transverse to the rotational axis of the rear wheel (22) and, in the usage state transverse to the plane defined by the axes of the front and rear wheels when parallel.

2. The trolley-like folding bicycle (1, 1a) as claimed in claim 1, wherein when the trolley-like folding bicycle (1, 1a) is in the folded state (S2)for being drawn, the seat post (14) forms a setal post axis (14L), and an included angle formed by the seat post axis (14L) and the draw bar axis (50L) is 60 to 120 degrees.

3. The trolley-like folding bicycle (1, 1a) as claimed in claim 1 or 2, wherein when the trolley-like folding bicycle (1, 1a) is in the folded state (S2) for being drawn, the first auxiliary wheel (61) and the second auxiliary wheel (62) are on the same side of the rear wheel (22).

4. The trolley-like folding bicycle (1, 1a) as claimed in any of the preceding claims and in particular claim 3, wherein an included angle formed by the draw bar axis (50L) and the bicycle body axis (1L) is 0 to 35 degrees.

5. The trolley-like folding bicycle (1, 1a) as claimed in any of the preceding claims and in particular in claim 4, wherein when the trolley-like folding bicycle (1, 1a) is in the folded state (S2), the draw bar (50, 50a) is located between the front wheel (21) and the rear wheel (22).

6. The trolley-like folding bicycle (1, 1a) as claimed in any of the preceding claims and in particular claim 5, wherein the draw bar (50, 50a) is connected to the rear half frame (13).

7. The trolley-like folding bicycle (1, 1a) as claimed in any of the preceding claims and in particular claim 6, wherein the rear half frame (13) further comprises a rear seat frame (131), and the draw frame (63) is connected to the rear seat frame (131).

8. The trolley-like folding bicycle (1, 1a) as claimed in claim 7, wherein the draw frame (63) further comprises a first U-shaped frame (631) and a second U-shaped frame (632).

9. The trolley-like folding bicycle (1, 1a) as claimed in claim 8, wherein the first auxiliary wheel (61) is located at the first U-shaped frame (631), and the second auxiliary wheel (62) is located at the second U-shaped frame (632), wherein the first auxiliary wheel (61) and the second auxiliary wheel (62) are respectively located on the same side of the first U-shaped frame (631) and the second U-shaped frame (632).

10. The trolley-like folding bicycle (1, 1a) as claimed in claim 8 or 9, wherein the draw wheel set (60) further comprises a first cushion block (64) and a second cushion block (65), and the first cushion block (64) and the second cushion block (65) are respectively located aL the first U-shaped frame (631) and the second U-shaped frame (632), such that when the trolley-like folding bicycle (1, 1a) is in the folded state (S2), the trolley-like folding bicycle (1, 1a) stands via the first cushion block (64), the second cushion block (65), the first auxiliary wheel (61), and the second auxiliary wheel (62).

11. The trolley-like folding bicycle (1) as claimed in any of claims 1 to 10, wherein the draw bar (50) is a telescopic bar (50).

12. The trolley-like folding bicycle (1a) as claimed in any of claims 1 to 10, wherein the draw bar (50a) is a hollow tube (50a).

13. The trolley-like folding bicycle (1a) as claimed in claim 12, wherein the seat post (14) can be connected to the draw bar (50a) af-Ler being dismounted.

14. The trolley-like folding bicycle (1a) as claimed in claim 13, wherein the draw bar (50a) has a quick release clamp (51a), and the quick release clamp (51a) is for dismounting the seat post (14).

## Patentansprüche

1. Ein handwagenartiges Klappfahrrad (1, 1a), umfassend einen Fahrradrahmen (10), ein Vorderrad (21), ein Hinterrad (22), einen Sattel (25), eine Klappeinrichtung (30) und ein Getriebe (40), welches entlang der Körperachse (1L) des Fahrrads angeordnet ist, wobei der Fahrradrahmen (10) einen Kontrollrahmen (11), einen vorderen Halbrahmen (12), einen hinteren Halbrahmen (13) und eine Sattelstütze (14) umfasst, wobei der Kontrollrahmen (11) mit dem vorderen Halbrahmen (12) und mit dem Vorderrad (21) verbunden ist, wobei der hintere Halbrahmen (13) mit der Sattelstütze (14) und dem Hinterrad (22) verbunden ist, wobei das Getriebe (40) mit dem hinteren Halbrahmen (13) und dem Hinterrad (22) verbunden ist, wobei die Klappeinrichtung (30) den vorderen Halbrahmen (12) und den hinteren Halbrahmen (13) verbindet und es ermöglicht, dass der vordere Halbrahmen (12) und der hintere Halbrahmen (13) derart geklappt werden, dass das Vorderrad (21) und das Hinterrad (22) sich durch die Betätigung der Klappeinrichtung (30) einander annähern, wobei das handwagenartige Klappfahrrad (1, 1a) einen Benutzungszustand (S1) und einen Klappzustand (S2) aufweist,
**dadurch gekennzeichnet, dass** das handwagenartige Klappfahrrad (1, 1a) folgendes umfasst:
eine Zugstange (50, 50a), die mit dem Fahrradrahmen (10) verbunden ist;
einen Satz von Zugrädern (60), der ein erstes Hilfsrad (61), ein zweites Hilfsrad (62) und einen Zugrahmen (63) umfasst, wobei der Zugrahmen (63) mit dem hinteren Halbrahmen (13) verbunden ist, wobei das erste Hilfsrad (61) und das zweite Hilfsrad (62) mit dem Zugrahmen (63) verbunden sind, wobei das erste Hilfsrad (61) und das zweite Hilfsrad (62) seitlich in Bezug zu dem Hinterrad und auf der gleichen Seite davon angeordnet sind;
wobei, wenn sich das handwagenartige Klappfahrrad (1, 1a) in seinem Klappzustand (S2) befindet um gezogen zu werden, die Zugstange (50, 50a) eine Zugstangenachse (50L) bildet, das erste Hilfsrad (61) und das zweite Hilfsrad (62) eine Rotationsachse (60L) bilden, und die Zugstangenachse (50L) im Wesentlichen senkrecht zu der Rotationachse (60L) ist,
wobei die Rotationsachse (60L) der Hilfsräder (61, 62) quer zu der Rotationsachse des Hinterrades (22) verläuft und, im Benutzungszustand, quer zu der Ebene, die von den Achsen des Vorder- und des Hinterrades definiert wird, wenn diese parallel zueinander sind.

2. Ein handwagenartiges Klappfahrrad (1, 1a) nach Anspruch 1, wobei, wenn sich das handwagenartige Klappfahrrad (1, 1a) in seinem Klappzustand (S2) befindet, um gezogen zu werden, die Sattelstütze (14) eine Sattelstützenachse (14L) bildet und der Winkel, der von der Sattelstützenachse (14L) und der Zugstangenachse (50L) gebildet wird, 60° bis 120° beträgt.

3. Ein handwagenartiges Klappfahrrad (1, 1a) nach einem der Ansprüche 1 oder 2, wobei, wenn sich das handwagenartige Klappfahrrad (1, 1a) in seinem Klappzustand (S2) befindet, um gezogen zu werden, das erste Hilfsrad (61) und das zweite Hilfsrad (62) sich auf der gleichen Seite des Hinterrads (22) befinden.

4. Ein handwagenartiges Klappfahrrad (1, 1a) nach einem der vorhergehenden Ansprüche und insbesondere nach Anspruch 3, wobei der Winkel, der von der Zugstangenachse (50L) und der Körperachse (1L) des Fahrrads gebildet wird, 0° bis 35° beträgt.

5. Ein handwagenartiges Klappfahrrad (1, 1a) nach einem der vorhergehenden Ansprüche und insbesondere nach Anspruch 4, wobei sich die Zugstange (50, 50a) zwischen dem Vorderrad (21) und dem Hinterrad (22) befindet, wenn sich das handwagenartige Klappfahrrad (1, 1a) in seinem Klappzustand (S2) befindet.

6. Ein handwagenartiges Klappfahrrad (1, 1a) nach einem der vorhergehenden Ansprüche und insbesondere nach Anspruch 5, wobei die Zugstange (50, 50a) mit dem hinteren Halbrahmen (13) verbunden ist.

7. Ein handwagenartiges Klappfahrrad (1, 1a) nach einem der vorhergehenden Ansprüche und insbesondere nach Anspruch 6, wobei der hintere Halbrahmen (13) zusätzlich noch einen Rücksitzrahmen (131) umfasst und wobei der Zugrahmen (63) mit dem Rücksitzrahmen (131) verbunden ist.

8. Ein handwagenartiges Klappfahrrad (1, 1a) nach Anspruch 7, wobei der Zugrahmen (63) auch noch einen ersten U-förmigen Rahmen (631) und einen zweiten U-förmigen Rahmen (632) umfasst.

9. Ein handwagenartiges Klappfahrrad (1, 1a) nach Anspruch 8, wobei das erste Hilfsrad (61) an dem ersten U-förmigen Rahmen (631) und das zweite Hilfsrad (62) an dem zweiten U-förmigen Rahmen (632) angeordnet sind, wobei das erste Hilfsrad (61) und das zweite Hilfsrad (62) jeweils auf der gleichen Seite des ersten U-förmigen Rahmens (631) und des zweiten U-förmigen Rahmens (632) angeordnet sind.

10. Ein handwagenartiges Klappfahrrad (1, 1a) nach einem der Ansprüche 8 oder 9, wobei der Satz von Zugrädern (60) weiterhin noch einen ersten Dämpfungsabschnitt (64) und einen zweiten Dämpfungsabschnitt (65) umfasst und der erste Dämpfungsabschnitt (64) und der zweite Dämpfungsabschnitt (65) jeweils an dem ersten U-förmigen Rahmen (631) und dem zweiten U-förmigen Rahmen (632) angeordnet sind, so dass, wenn das handwagenartige Klappfahrrad (1, 1a) sich in seinem Klappzustand (S2) befindet, es auf dem ersten Dämpfungsabschnitt (64), dem zweiten Dämpfungsabschnitt (65), dem ersten Hilfsrad (61) und dem zweiten Hilfsrad (62) steht.

11. Ein handwagenartiges Klappfahrrad (1, 1a) nach einem der Ansprüche 1 bis 10, wobei die Zugstange (50) eine Teleskopstange (50) ist.

12. Ein handwagenartiges Klappfahrrad (1, 1a) nach einem der Ansprüche 1 bis 10, wobei die Zugstange (50a) ein hohles Rohr (50a) ist.

13. Ein handwagenartiges Klappfahrrad (1, 1a) nach Anspruch 12, wobei die Sattelstütze (14), nachdem sie demontiert wurde, mit der Zugstange (50a) verbunden werden kann.

14. Ein handwagenartiges Klappfahrrad (1, 1a) nach Anspruch 13, wobei die Zugstange (50a) eine Schnelllöseklammer (51a) besitzt und die Schnelllöseklammer (51a) zur Demontage der Sattelstütze (14) dient.

## Revendications

1. Bicyclette pliable (1, 1a) de type chariot, comprenant un cadre de la bicyclette (10), une roue avant (21), une roue arrière (22), une selle (25), un dispositif de pliage (30), et une transmission (40) montée le long d'un axe (1L) du corps de la bicyclette, le cadre de la bicyclette (10) comprenant un bloc de commande (11), une moitié de cadre avant (12), une moitié de cadre arrière (13), et une tige de selle (14), le bloc de commande (11) étant relié à la moitié de cadre avant (12) et la roue avant (21), la moitié de cadre arrière (13) étant reliée à la tige de selle (14) et la roue arrière (22), la transmission (40) étant reliée la moitié de cadre arrière (13) et à la roue arrière (22), le dispositif de pliage (30) reliant la moitié de cadre avant (12) et la moitié de cadre arrière (13) et permettant à la moitié de cadre avant (12) et la moitié de cadre arrière (13) d'être repliées de telle sorte que la roue avant (21) et la roue arrière (22) viennent à proximité l'une de l'autre, par le fonctionnement du dispositif de pliage (30), la bicyclette pliable (1, 1a) de type chariot présentant un état d'utilisation (S1) et un état de pliage (S2), **caractérisée en ce que** la bicyclette pliable (1, 1a) de type chariot comporte :
une barre de traction (50, 50a) reliée au cadre de la bicyclette (10), et
un ensemble de roues de traction (60) comprenant une première roue auxiliaire (61), une deuxième roue auxiliaire (62), et une structure de traction (63), la structure de traction (63) étant reliée à la moitié de cadre arrière (13), la première roue auxiliaire (61) et la deuxième roue auxiliaire (62) étant reliées à la structure de traction (63), la première roue auxiliaire (61) et la deuxième roue auxiliaire (62) étant positionnées latéralement par rapport la roue arrière, du même côté que celle-ci ;
de sorte que, lorsque la bicyclette pliable (1, 1a) de type chariot est à l'état de pliage (S2) en vue d'être tirée, la barre de traction (50, 50a) forme un axe (50L) de barre de traction, la première roue auxiliaire (61) et la deuxième roue auxiliaire (62) forment un axe (60L) de rotation pour la traction, et l'axe (50L) de barre de traction est sensiblement perpendiculaire à l'axe (60L) de rotation pour la traction,
l'axe (60L) de rotation pour la traction des roues auxiliaires (61, 62) étant transversal à l'axe de rotation de la roue arrière (22) et, dans l'état d'utilisation, étant transversal au plan défini par les axes des roues avant et arrière lorsqu'elles sont parallèles.

2. La bicyclette pliable (1, 1a) de type chariot selon la revendication 1, dans laquelle, lorsque la bicyclette pliable (1, 1a) de type chariot est à l'état de pliage (S2) en vue d'être tirée, la tige de selle (14) forme un axe (14L) de tige de selle, et un angle inclus formé par l'axe (14L) de tige de selle et l'axe (50L) de la barre de traction est de 60 à 120 degrés.

3. La bicyclette pliable (1, 1a) de type chariot selon la revendication 1 ou la revendication 2, dans laquelle, lorsque la bicyclette pliable (1, 1a) de type chariot est à l'état de pliage (S2) en vue d'être tirée, la première roue auxiliaire (61) et la deuxième roue auxiliaire (62) sont du même côté de la roue arrière (22).

4. La bicyclette pliable (1, 1a) de type chariot selon l'une quelconque des revendications précédentes et en particulier selon la revendication 3, dans laquelle un angle inclus fermé par l'axe (50L) de la barre de traction et l'axe (1L) du corps de la bicyclette est de 0 à 35 degrés.

5. La bicyclette pliable (1, 1a) de type chariot selon l'une quelconque des revendications précédentes et en particulier selon la revendication 4, dans laquelle, lorsque la bicyclette pliable (1, 1a) de type chariot est l'état de pliage (S2), la barre de traction (50, 50a) est située entre la roue avant (21) et la roue arrière (22).

6. La bicyclette pliable (1, 1a) de type chariot selon l'une quelconque des revendications précédentes et en particulier selon la revendication 5, dans laquelle la barre de traction (50, 50a) est reliée à la moitié de cadre arrière (13).

7. La bicyclette pliable (1, 1a) de type chariot selon l'une quelconque des revendications précédentes, et en particulier selon la revendication 6, dans laquelle la moitié de cadre arrière (13) comprend en outre un châssis de siège arrière (131), et la structure de traction (63) est reliée au châssis de siège arrière (131).

8. La bicyclette pliable (1, 1a) de type chariot selon la revendication 7, dans laquelle la structure de traction (63) comprend en outre un premier châssis en forme de U (631) et un deuxième châssis en forme de U (632).

9. La bicyclette pliable (1, 1a) de type chariot selon la revendication 8, dans laquelle la première roue auxiliaire (61) est située sur le premier châssis en forme de U (631), et la deuxième roue auxiliaire (62) est située sur le deuxième châssis en forme de U (632), la première roue auxiliaire (61) et la deuxième roue auxiliaire (62) étant respectivement situées sur le même côté que le premier châssis en forme de U (631) et le deuxième châssis en forme de U (632).

10. La bicyclette pliable (1, 1a) de type chariot selon la revendication 8 ou 9, dans laquelle l'ensemble (60) formant roue de traction comprend en outre un premier bloc d'amortissement (64) et un deuxième bloc d'amortissement (65), et le premier bloc d'amortissement (64) et le deuxième bloc d'amortissement (65) sont respectivement situés sur le premier châssis en forme de U (631) et le deuxième châssis en forme de U (632), de telle sorte que, lorsque la bicyclette pliable (1, 1a) de type chariot est à l'état de pliage (S2), la bicyclette pliable (1, 1a) de type chariot tient debout sur le premier bloc d'amortissement (64), le deuxième bloc d'amortissement (65), la première roue auxiliaire (61), et la deuxième roue auxiliaire (62).

11. La bicyclette pliable (1) de type chariot selon l'une quelconque des revendications 1 à 10, dans laquelle la barre de traction (50) est une barre télescopique (50).

12. La bicyclette pliable (11a) de type chariot selon l'une quelconque des revendications 1 à 10, dans laquelle la barre de traction (50a) est un tube creux (50a).

13. La bicyclette pliable (1a) de type chariot selon la revendication 12, dans laquelle la tige de selle (14) peut être reliée à la barre de traction (50a) après avoir été démontée.

14. La bicyclette pliable de type chariot (1a) selon la revendication 1, dans laquelle la barre de traction (50a) comporte une pince à serrage rapide (51a), et la pince de serrage rapide (51a) est pour le démontage de la tige de selle (14).
